# FASCICULE DE BREVET EUROPEEN

(11) **EP 1 527 023 B1**
(45) Date de publication et mention de la délivrance du brevet: **30.11.2011**
(21) Numéro de dépôt: 03758188.1
(22) Date de dépôt: 30.07.2003
(51) Int. Cl.: C03B 5/235

(54) **PROCEDE ET FOUR A CUVES EN SERIE POUR LA FUSION DU VERRE**
VERFAHREN UND EINE REIHE VON WANNENÖFEN ZUM SCHMELZEN VON GLAS
FURNACE WITH SERIES-ARRANGED BATHS FOR PRODUCING GLASS COMPOUNDS HAVING A LOW DEGREE OF UNMELTED MATERIAL

(30) Priorité: 31.07.2002 FR 0209728
(43) Date de publication de la demande: 04.05.2005
(73) Titulaire: SAINT-GOBAIN GLASS FRANCE, 92400 Courbevoie (FR)
(72) Inventeur: JACQUES, Rémi, F-60190 Estrées Saint-Denis (FR); JEANVOINE, Pierre, F-78300 Poissy (FR); PALMIERI, Biagio, Bâtiment B,2F-60200 Compiègne (FR)
(74) Mandataire: Colombier, Christian
(86) Numéro de dépôt international: PCT/FR2003/002414
(87) Numéro de publication internationale: WO 2004/013056

(56) Documents cités:
- EP-A- 0 738 692
- EP-A- 1 067 099
- GB-A- 1 028 481
- US-A- 3 170 781
- US-A- 4 877 449
- US-A- 5 630 369
- PATENT ABSTRACTS OF JAPAN vol. 008, no. 041 (C-211), 22 février 1984 (1984-02-22) & JP 58 199728 A (KOGYO GIJUTSUIN;OTHERS: 0J), 21 novembre 1983 (1983-11-21)

## Description

L'invention concerne un four comprenant plusieurs cuves en série équipées chacune d'au moins un brûleur immergé, permettant de fondre efficacement, c'est-à-dire avec un faible taux d'infondus et pour une consommation réduite d'énergie, les compositions comprenant de la silice. L'invention concerne plus particulièrement la préparation de compositions de verre comme les frittes de verre, notamment les frittes de coloration de verre, ou les frittes entrant dans la composition des émaux, glaçures et engobe, comme l'émail généralement noir, pouvant contenir de l'oxyde de manganèse, disposé sur le pourtour des vitrage d'automobile. Rappelons qu'un émail est un verre à bas point de fusion et qui est destiné à être appliqué en couche sur un support, lequel peut être en céramique (cas de la glaçure), en verre ou en métal. Ces compositions peuvent contenir ou ne pas contenir des agents colorants, opacifiants ou autres additifs utilisés soit pour colorer d'autres verres dans la masse, soit pour décorer en surface des supports céramiques, métalliques, vitreux ou d'autre nature. L'invention permet notamment non seulement la réalisation aisée des frittes pour émaux décrites dans les EP 1067100 et EP 0883579, mais également la réalisation directe desdits émaux.

Le brevet US4877449 enseigne un four de fusion de matières vitrifiables comprenant des cuves équipées de brûleurs immergés, lesdites cuves pouvant être alimentées individuellement en matière vitrifiable.

Le brevet US3170781 enseigne un four de fusion de verre comprenant deux cuves en série équipées chacune de brûleurs immergés.

Les frittes de coloration de verre sont des compositions particulières que l'on ajoute à une autre composition de verre majoritaire de façon à incorporer un additif, comme un pigment, à ladite composition majoritaire. Habituellement, une fritte de coloration de verre se présente sous la forme de morceaux de verre, généralement carrés, au volume allant par exemple de 0,5 à 3 cm³, lesdits morceaux étant ajoutés à une composition de verre en fusion circulant dans un canal d'alimentation d'une station de formage, par exemple de verre creux (flacons, bouteilles, etc). Ces frittes solides sont jetées dans le verre majoritaire en fusion, généralement entre 1250 et 1350 °C. La fritte fond alors et se mélange à la composition de verre majoritaire, le cas échéant sous l'action de moyens d'homogénéisations comme des agitateurs. La fritte de coloration représente généralement 1 à 5% de la masse du verre final. En effet, on n'ajoute pas directement un colorant (ou pigment), généralement un oxyde, à une composition en fusion, car il aurait tendance à tomber directement au fond et se mélangerait très mal au reste du verre, et de plus il s'envolerait de façon importante sous l'effet des importants flux gazeux provenant des brûleurs. C'est pourquoi on a recours à des frittes de coloration de verre, car cela améliore l'homogénéisation avec le verre majoritaire et cela supprime les envols sous l'effet des flux gazeux.

La fusion de la silice, notamment dans le cadre de la réalisation de frittes de verre ou d'émail, nécessite un chauffage à haute température et pendant une longue durée afin de réduire le taux d'infondus de silice, ce qui implique l'emploi de matériaux onéreux et ce qui habituellement est réalisé avec de faibles productivités. Ainsi, on sait réaliser une fritte de verre par fusion en pot (ou en creuset), lequel est chauffé par des brûleurs. Pour ce faire, il est nécessaire de chauffer à plus de 1200°C pendant 16 heures pour réduire les infondus à un taux acceptable. De plus, une telle technique est du type discontinue (« batch »). Par ailleurs, lorsque l'on souhaite passer d'une composition à une autre dans le cadre de deux campagnes de fabrication différentes, le nettoyage du pot prend beaucoup de temps (long « temps de transition »). En effet, le nettoyage nécessite la réalisation d'une fabrication complète avec un verre neutre (également appelé « verre blanc ») dans lequel les résidus de la campagne précédente vont se diluer. Ce n'est qu'après cette fabrication intermédiaire d'un verre en fait destiné au rebut que la fabrication de la nouvelle composition peut commencer. Par ailleurs, cette technique se traduit par un envol important de matières, notamment de B₂O₃ et autres oxydes. En effet, ces matières ont tendance à être évacuées de la masse des matières vitrifiables sous l'effet d'une part de l'envol physique des poudres entraînées par les flux gazeux produits par les brûleurs, et d'autre part suite à des réactions chimiques, notamment entre oxydes et eau ou entre oxydes et fondant, lesdites réaction chimiques donnant lieu à la formation de gaz se condensant dans les parties froides du four comme les conduits d'évacuation des fumées. Ces deux phénomènes contribuent tous deux au phénomène dit des envols lesquels se traduisent par un bilan matière de fabrication plus défavorable (comparaison entre les quantités introduites et les quantités obtenues dans la composition finale).

L'invention résout les problèmes sus-mentionnés. Le procédé selon l'invention mène avec de fortes productivités, de faibles envols et de courts temps de séjour des matières vitrifiables, à des compositions de verre avec peu d'infondus, voire exemptes d'infondus. De plus, les temps de transition permettant de passer d'une composition à une autre sont très courts. Notamment, l'invention permet généralement l'usage de plus faibles température et donc l'usage de matériaux moins onéreux. Grâce aux faibles temps de transition qu'il permet, le four selon l'invention peut également servir à la préparation d'émail prêt à l'emploi (pour le bâtiment ou les vitrages automobile ou autre) c'est-à-dire un émail obtenu directement à partir de ses matières premières et broyés ensuite et non plus comme dans le cas de l'art antérieur un émail obtenu par mélange d'une fritte broyée et du pigment.

La disposition selon l'invention de plusieurs réacteurs en série permet d'abaisser considérablement la température des réacteurs tout en conservant la qualité du produit fini exprimée en termes d'infondus, d'homogénéité et même de niveau général de bouillons (c'est-à-dire la quantité de bulles restant piégées dans le produit fini). Ceci est un avantage important lorsque les matières à fondre contiennent des éléments volatils comme l'oxyde de bore, l'oxyde de zinc, l'oxyde de sélénium ou autre, car alors, les émissions dans les fumées, étant en relation en général de type exponentielle avec la température, sont limitées. Le lavage des fumées s'en trouve d'autant facilité.

La plus faible température des réacteurs présente également l'avantage de ce que les infiltrations de verre dans les interstices des réfractaires du four sont moins importantes. En effet, la masse fondue infiltrée se solidifie plus vite dans le réfractaire du fait de la plus faible température et bouche l'interstice à un niveau plus proche de l'intérieur du four.

Un autre avantage de l'invention réside dans le fait que les verres et notamment les frittes étant en général très agressifs pour les matériaux réfractaires, un niveau bas de température permet d'allonger la durée de vie du four. On peut ainsi utiliser une construction classique en verrerie : réfractaire en contact avec le verre fondu, un isolant étant placé derrière ledit réfractaire. On peut aussi choisir pour la totalité ou une partie seulement du four une solution consistant en l'utilisation d'un ensemble comprenant un réfractaire en contact avec le verre fondu, une tôle métallique refroidie étant placée derrière ledit réfractaire, cette solution étant recommandée dans le cas ou l'on privilégie la durée de vie sur la consommation spécifique, et de plus, cette solution permet de supprimer les risques de coulée hors du four en raison de la grande fluidité des compositions. Le refroidissement peut être assuré par un ruissellement d'eau sur la partie extérieure de la tôle ou par un tube de circulation d'eau continu enroulé et soudé sur ladite tôle.

Le procédé selon l'invention fait intervenir la fusion en continu d'une composition comprenant de la silice dans un four comprenant au moins deux cuves et de préférence trois cuves en série, lesdites cuves comprenant chacune au moins un brûleur immergé dans les matières fondues. De la silice et du fondant de la silice sont enfournés dans la première cuve. L'essentiel de la silice de la fritte, soit au moins 80% et de préférence au moins 90% en poids de la silice de la fritte et de préférence la totalité est enfournée dans la première cuve, laquelle est plus chaude que la ou les autres cuves du four. Au moins 80% et de préférence au moins 90% en poids et même la totalité du fondant de la silice est enfourné dans la première cuve.

Les brûleurs immergés ont la double fonction de chauffer les matières vitrifiables et d'homogénéiser la composition. Compte tenu du fort brassage qu'ils produisent, le frottement et la projection des matières fondues contre les parois est habituellement à l'origine d'une usure desdites parois, non seulement sous le niveau des matières fondues mais également au-dessus, notamment au niveau de la voute, du fait des projections importantes. Cependant l'invention permet de réduire de façon significative ce phénomène du fait des plus faibles températures nécessaires, notamment lorsque seule la première cuve présente une forte température pour fondre efficacement l'essentiel de la silice, la ou les autres cuves suivantes étant portées à une température plus modérée. Du fait de cette température plus modérée, la matière fondue est plus visqueuse et les projections et mouvements de matière fondue sont moins importants ce qui se traduit par une usure plus faible des parois. De plus, les matières fondues plus visqueuse montrent une plus faible tendance à s'introduire dans les interstices ou défauts des parois, ce qui facilite également la purge du four dans le cas d'un changement de composition à fabriquer (réduction du temps de transition). La première cuve est portée à la température la plus forte du four, la ou les autres cuve présentant une température plus faible. La ou les cuves après la première, présentent une température inférieure à celle de la première, cette différence étant d'au moins 80°C et pouvant aller par exemple jusqu'à 200°C.

Généralement, la première cuve est portée à une température allant de 1000 à 1350°C et plus généralement de 1230 à 1350 °C et le four comprend au moins une autre cuve portée à une température inférieure à 1150°C. Le four comprend donc généralement au moins deux cuves présentant entre elles une différence de température d'au moins 80°C, la première recevant l'essentiel de la silice et étant la plus chaude. Selon l'invention, l'usage d'une seule cuve portée à la plus haute température, suivi d'une autre cuve à une plus basse température, permet de fondre efficacement les matières vitrifiables avec un taux d'infondus final très faible, voire nul. Les grains de silice sont majoritairement fondus dans la première cuve. Les grains n'ayant pas été entièrement fondus dans la première cuve le sont dans au moins une autre cuve qui suit. Globalement, l'invention permet la réduction de l'usage de matériaux de construction onéreux du fait des plus faibles températures nécessaires et/ou des fortes vitesses de production, notamment dans le cas ou au moins une cuve fonctionne à une température inférieure à celle de la première cuve, tout en procurant une absence d'infondus et avec une forte productivité.

La première cuve est équipée de moyens d'enfournement de matières vitrifiables. On introduit généralement dans cette première cuve l'essentiel de la silice nécessaire à l'élaboration de la composition finale ainsi que le fondant de la silice. Ce fondant est généralement Na₂CO₃, lequel se transforme en Na₂O au cours de la vitrification. On peut également introduire dans cette première cuve un fluidifiant tel que B₂O₃. On peut également alimenter la première cuve en déchets combustibles comme par exemple des matières plastiques, du charbon, des huiles usagées, des déchets de pneu, etc, de façon à réduire les coûts énergétiques. Les matières premières peuvent être broyées ou micronisées et présenter une granulométrie fine. Cependant, grâce à son efficacité pour fusionner les matières vitrifiables (faible taux d'infondus), le four peut également être alimenté en matières premières naturelles de granulométrie relativement grossière. Compte tenu du degré intense de brassage procuré par les brûleurs immergés, il n'est pas indispensable de mélanger les matières premières avant enfournement dans chaque cuve. On peut utiliser cet avantage pour préchauffer par exemple la silice séparément des autres matières premières, par la fumée de combustion, ce qui procure une diminution du coût énergétique.

On peut introduire toutes les matières vitrifiables dans la première cuve. De préférence, on introduit cependant les matières vitrifiables autres que la silice, le fondant de la silice et le fluidifiant, dans au moins une cuve située en aval de la première cuve, et de préférence dans la cuve située directement après la première cuve, c'est-à-dire la deuxième cuve. L'ajout des matières vitrifiables autres que la silice, le fondant de la silice et le fluidifiant dans une cuve en aval de la première cuve permet de réduire le phénomène des envols de ces matières. En effet, la première cuve étant la plus chaude du four, l'introduction de ces matières dans une autre cuve se traduit par une réduction des envols de ces matières en raison de la température plus basse de la cuve d'introduction.

De préférence, on ajoute également le fluidifiant dans au moins une cuve située en aval de la première cuve, et de préférence dans la cuve située directement après la première cuve, c'est-à-dire la deuxième cuve. Ceci est plus particulièrement recommandé car la première cuve est plus chaude que la ou les autres cuves. En effet, si l'on ajoute le fluidifiant dans la première cuve, la viscosité du verre, déjà assez faible du fait de la forte température, est encore réduite. Cela a pour conséquence de favoriser les mouvements du verre en fusion et cela aggrave d'autant le problème de l'abrasion des parois de la première cuve. Le fait que le fluidifiant ne soit pas introduit dans la première cuve permet de conserver une plus forte viscosité dans la première cuve. Par ailleurs, comme le fluidifiant est introduit dans au moins une autre cuve à plus basse température que la première cuve, il est introduit en un endroit ou la viscosité du verre est plus élevée du fait de la plus faible température et la diminution de viscosité que son ajout procure peut de ce fait être plus facilement toléré.

L'invention concerne également un procédé de préparation en continu de compositions comprenant de la silice par fusion dans un four comprenant au moins deux cuves en série, lesdites cuves comprenant chacune au moins un brûleur immergé dans les matières fondues, de la silice et du fondant de la silice étant enfournés dans la première cuve, au moins 90 % de la silice et au moins 90% du fondant de la silice étant enfournés dans la première cuve, le four étant alimenté en un fluidifiant dont au moins 90% est introduit dans la seconde cuve du four.

Les matières vitrifiables autres que la silice, le fondant de la silice et le fluidifiant sont généralement au moins un oxyde d'un métal comme le Chrome, le Cobalt, le Cuivre, le Nickel, le Selenium, le zirconium, le titane, le manganèse, le praséodyme, le fer, le zinc. Ces oxydes jouent généralement le rôle de colorant où d'opacifiant.

La composition finale comprend généralement 10 à 70 % en poids de SiO₂, par exemple 40 à 70% en poids de SiO₂.

La composition finale comprend généralement 0,3 à 30 % en poids de Na₂O, par exemple 20 à 30% en poids de Na₂O.

La composition finale comprend généralement 5 à 30 % en poids de B₂O₃, par exemple 5 à 15% de B₂O₃,

La composition finale comprend généralement 0,3 à 35 % en poids (par exemple 3 à 20% en poids) d'au moins un oxyde d'un élément autre que Si, Na et B, lequel est généralement au moins l'un des métaux suivants : le Chrome, le Cobalt, le Cuivre, le Nickel, le Selenium, le zirconium, le titane, le manganèse, le praséodyme, le fer, le zinc.

Notamment dans le cas de la fabrication d'une fritte de coloration de verre, la composition finale peut comprendre 40 à 70 % en poids de SiO₂, 20 à 30 % en poids de Na₂O, 5 à 15 % en poids de B₂O₃, et 3 à 20 % en poids d'au moins un oxyde d'un métal autre que Si, Na et B, lequel est généralement au moins l'un des métaux suivants: le Chrome, le Cobalt, le Cuivre, le Nickel, le Selenium, le zirconium, le titane, le manganèse, le praséodyme, le fer, le zinc.

La composition finale peut contenir des oxydes d'un même métal sous plusieurs degré d'oxydation différents. C'est notamment le cas des frittes contenant un mélange Cr₂O₃ / CrO₃ ou un mélange CuO / Cu₂O. Le réglage du rapport massique des oxydes aux degrés d'oxydation différents au sein de la même composition permet d'influencer la coloration de la fritte finale. L'invention permet un tel réglage en jouant sur le caractère plus au moins oxydant de la flamme des brûleurs immergés, et plus particulièrement des brûleurs immergés de la dernière cuve du four selon l'invention. On influence le caractère plus ou moins oxydant d'une flamme par l'ajustement de la proportion de l'oxydant de la flamme (air ou oxygène) par rapport à celle du combustible.

Le four selon l'invention comprend au moins trois cuves. Lorsque le four comprend trois cuves, notamment lorsqu'il fabrique une fritte de verre, la première cuve peut être portée à une température allant de 1230 à 1350 °C, la seconde être portée à une température allant de 1000°C à 1150°C et la troisième à une température allant de 900°C à 1000°C. Le cas échéant, le réglage du degré d'oxydation de certains oxydes (comme ceux de Cu ou Cr) est réalisé dans cette troisième cuve. Dans le cas d'un four à trois cuves, aucune matière n'est généralement enfournée dans la troisième cuve.

Ainsi, généralement, le four selon l'invention comprend au moins trois cuves en série, deux des cuves comprenant chacune des moyens d'enfournement séparés, la première au moins pour l'enfournement de la silice et du fondant de la silice, la seconde pour l'enfournement d'autres matières comme le fluidifiant et/ou au moins un oxyde d'un métal.

Selon une variante de l'invention, le four comprend au moins trois cuves en série, la seconde étant portée à une température allant de 1000°C à 1150°C et la troisième à une température allant de 900°C à 1000°C, au moins un oxyde d'un métal étant introduit dans la seconde cuve du four, l'oxyde présentant plusieurs degrés d'oxydation, et le(s) brûleur(s) immergé(s) de la troisième cuve ayant une flamme suffisamment oxydante pour que le degré d'oxydation de l'oxyde augmente en passant de la seconde à la troisième cuve.

Les différentes cuves du four peuvent par exemple chacune avoir un volume utile (c'est-à-dire égal au volume de verre contenu) allant de 100 à 500 litres. Notamment, dans le cas d'un four à trois cuves, la première cuve peut avoir un volume utile allant de 250 à 350 l, la seconde un volume utile allant de 150 à 250 l et la troisième un volume utile allant de 100 à 200 litres. Au-dessus du volume utile occupé par le verre, il est recommandé de prévoir un volume libre important pour chaque cuve, par exemple allant de 0,3 à 1 fois le volume utile de ladite cuve.

Le verre s'écoule de la première cuve vers la dernière par gravité. Les différentes cuves en série communiquent par le biais de gorges où de déversoirs.

Les cuve peuvent avoir toute forme adaptée, être à section carrée, rectangulaire, polygonale où même circulaire. La forme cylindrique (section circulaire, l'axe du cylindre étant vertical) est préférée car elle présente l'avantage que le verre est plus efficacement homogénéisé (moins de volumes morts peu brassés). Cette forme cylindrique présente de plus l'avantage de pouvoir utiliser des réfractaires non façonnés pour la constitution du garnissage des parois, comme l'utilisation d'un béton réfractaire à liant hydraulique.

Les cuves peuvent être refroidies par ruissellement d'eau sur leur surface externe ou par un tube de circulation d'eau continu enroulé et soudé sur ladite tôle.

En sortie du four selon l'invention, la masse fondu peut être amenée vers un canal chauffé classiquement par radiation pour améliorer l'affinage ou un bassin d'affinage. Dans un tel bassin, le verre est étalé sur une faible profondeur, par exemple allant de 3 mm à 1 cm et chauffé de façon à être efficacement dégazé. Cette étape d'affinage est généralement réalisée entre 1050 et 1200°C. Le verre est ensuite amené à une station de formage tel qu'un laminage (cas de la réalisation de fritte). Un laminage, connu en lui-même, est habituellement réalisé entre 800 et 950°C et conduit à la formation des carrés de fritte.

Ainsi, l'invention concerne également un dispositif de préparation de compositions de verre comprenant un four selon l'invention suivi d'un canal ou bassin d'affinage.

Les matières enfournées peuvent l'être à l'aide de vis sans fin.

L'invention permet notamment la réalisation des compositions de frittes de coloration suivantes :
1. Fritte dite « au Chrome » utilisée pour donner une coloration vert-jaune :
   25% Na₂O,
   10% B₂O₃,
   2,9% d'oxyde de chrome (mélange Cr₂O₃ / CrO₃),
   62,1% SiO₂ ;
2. Fritte dite « au Cobalt » utilisée pour donner une coloration bleu :
   25% Na₂O,
   10% B₂O₃,
   5%CoO
   60% SiO₂ ;
3. Fritte dite « au cuivre » (mélange CuO / Cu₂O) utilisée pour donner une coloration bleu :
   25% Na₂O,
   10% B₂O₃,
   14,7% d'oxyde de cuivre (mélange CuO / Cu₂O),
   0,3% CoO,
   50% SiO₂ ;

Les frittes habituellement dites « au Nickel » ou au « Selenium » peuvent également être réalisées dans le cadre de l'invention.

L'invention permet également la réalisation des frittes de carrelage, par exemple celle de composition suivante :
1% Na₂O,
9% B₂O₃,
8% Al₂O₃,
6% CaO,
3% MgO,
6% K₂O,
8% ZrO₂,
9% ZnO,
50% SiO₂.

L'invention permet également la réalisation d'une fritte de verre au zinc comme par exemple la suivante :

| | |
|---|---|
| ZnO | 18 - 30 % |
| SiO₂ | 16 - 50 % |
| B₂O₃ | 10 - 25 % |
| Al₂O₃ | 1 - 4 % |
| F | 0-5% |
| Oxydes alcalins | 6 -15 % |
| (le plus souvent Na₂O et/ou K₂O) | |
| TiO₂ | 0 - 8 % , |

cette dernière composition pouvant entrer dans la composition d'un émail noir pour vitrage automobile comme décrit dans EP 1067100. Cette fritte au zinc peut ainsi être ajoutée à un verre riche en oxyde de manganèse pour produire un émail contenant du zinc et du manganèse. Un tel émail trouve une utilité notamment en surface du pourtour de vitrages pour automobile. L'invention permet cependant également la réalisation direct de l'émail dans le four selon l'invention.

L'invention permet également la réalisation d'une fritte de verre comme par exemple la suivante :

| | |
|---|---|
| Bi₂O₃ | 50-70 % |
| SiO₂ | 15-30 % |
| B₂O₃ | 1-13 % |
| Na₂O | 0,5-7 % |
| Al₂O₃ | 0,5-7 % |

cette dernière composition pouvant entrer dans la composition d'un émail noir pour vitrage automobile comme décrit dans EP 0883579. Cette fritte peut ainsi être ajoutée à un dérivé du manganèse (du type oxyde ou carbonate) pour produire un émail au manganèse. Un tel émail trouve une utilité notamment en surface du pourtour de vitrages pour automobile. L'invention permet cependant également la réalisation direct de l'émail au manganèse par le four selon l'invention.

L'invention permet la réalisation direct d'un émail, par exemple celui présentant la composition suivante: 7,7 % B₂O₃, 45,5 % Bi₂O₃, 12,2 % SiO₂, 1,8 % Na₂O, 2,8 % Al₂O₃ et 30 % MnO₂.

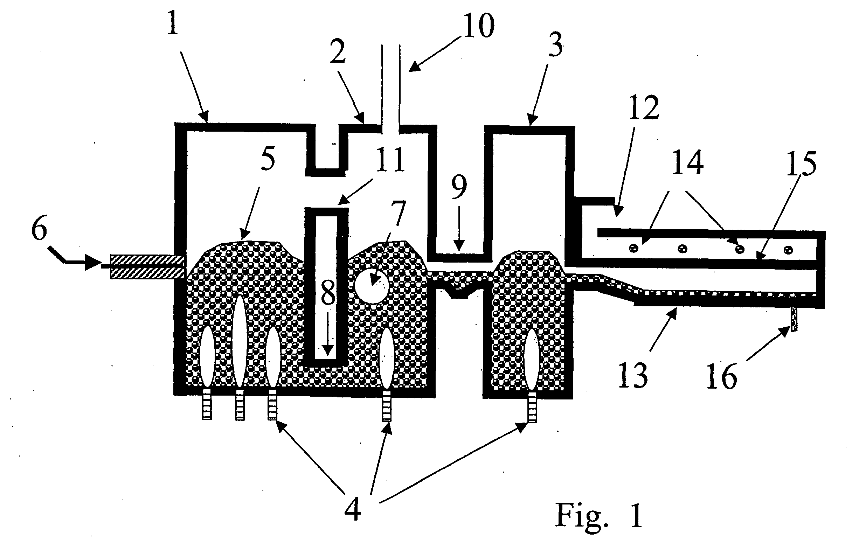

La figure 1 représente un four à trois cuves (1,2,3) selon l'invention. Ces cuves sont équipées de brûleurs immergés 4 dont les gaz rendent la masse de verre mousseuse. Le niveau du verre est représenté par 5. La silice et le fondant de la silice sont enfournés dans la première cuve en 6. Le fluidifiant et les oxydes de coloration sont enfournés dans la seconde cuve en 7. Le verre passe de la première cuve vers la deuxième cuve par la gorge 8 et de la deuxième cuve vers la troisième par le déversoir 9. La seconde cuve est équipée d'une cheminée 10 pour l'évacuation des fumées. Le verre quitte la troisième cuve pour subir une étape d'affinage dans le bassin 13. Ce bassin est chauffé indirectement à partir des brûleurs 14 au travers d'une pierre réfractaire 15. Un tel montage contribue également à la réduction des envols. Les fumées des brûleurs 14 s'échappent par l'ouverture 12. La composition de fritte final est ensuite évacuée en 16 pour aller à la station de laminage non représentée.

Selon cette configuration de four, et dans le cadre de la réalisation d'une fritte de verre au chrome, la première cuve peut être portée à 1250°C, la seconde à 1100°C et la troisième à 1000°C. La troisième sert surtout au règlage du degré d'oxydation de l'oxyde de chrome que l'on influence par le caractère plus ou moins oxydant de la flamme de la troisième cuve.

## Revendications

1. Procédé de préparation en continu de compositions comprenant de la silice par fusion de matières vitrifiables dans un four comprenant au moins deux cuves (1, 2) en série, lesdites cuves (1, 2) comprenant chacune au moins un brûleur immergé (4) dans les matières fondues, lesdits brûleurs immergés (4) chauffant les matières vitrifiables, au moins 80% de la silice et au moins 80% du fondant de la silice étant enfournés dans la première cuve (1), la première cuve (1) étant chauffée à une plus forte température que la ou les autres cuves du four, la différence de température entre la première cuve (1) et la ou les autres cuves étant d'au moins 80°C.

2. Procédé selon la revendication précédente **caractérisé en ce que** au moins 90 % de la silice et au moins 90% du fondant de la silice sont enfournés dans la première cuve.

3. Procédé selon la revendication précédente **caractérisé en ce que** le four est alimenté en un fluidifiant dont au moins 90% est introduit dans la seconde cuve du four.

4. Procédé selon la revendication précédente **caractérisé en ce que** la première cuve est portée à une température allant de 1230 à 1350 °C et **en ce que** la ou les autres cuves sont portées à une température d'au plus 1150°C.

5. Procédé selon l'une des revendications précédentes **caractérisé en ce que** la composition finale comprend 10 à 70 % en poids de SiO₂, 0,3 à 30 % en poids de Na₂O , 5 à 30 % en poids de B₂O₃, et 0,3 à 35 % en poids d'au moins un oxyde d'un métal autre que Si, Na et B.

6. Procédé selon la revendication précédente **caractérisé en ce que** la composition finale est une fritte comprenant 40 à 70 % en poids de SiO₂, 20 à 30 % en poids de Na₂O, 5 à 15 % en poids de B₂O₃, et 3 à 20 % en poids d'au moins un oxyde d'un métal autre que Si, Na et B.

7. Procédé selon l'une des deux revendications précédentes **caractérisé en ce que** le métal est choisi parmi le chrome, le cobalt, le cuivre, le nickel, le selenium, le zirconium, le titane, le manganèse, le praséodyme, le fer, le zinc.

8. Procédé selon l'une des revendications précédentes **caractérisé en ce que** au moins un oxyde d'un métal est introduit dans la seconde cuve du four.

9. Procédé selon la revendication précédente, **caractérisé en ce que** le four comprend au moins trois cuves en série, la seconde étant portée à une température allant de 1000°C à 1150°C et la troisième à une température allant de 900°C à 1000°C.

10. Procédé selon la revendication précédente **caractérisé en ce que** l'oxyde présente plusieurs degrés d'oxydation, et **en ce que** le(s) brûleur(s) immergé(s) de la troisième cuve a une flamme suffisamment oxydante pour que le degré d'oxydation de l'oxyde augmente en passant de la seconde à la troisième cuve.

11. Procédé selon l'une des revendications précédentes **caractérisé en ce que** la composition est une fritte de coloration ou une fritte de carrelage ou un émail.

12. Four pour la fusion en continu d'une composition comprenant de la silice, ledit four comprenant au moins trois cuves (1, 2, 3) en série, lesdites cuves comprenant chacune au moins un brûleur immergé (4) dans les matières fondues.

13. Four selon la revendication précédente **caractérisé en ce que** deux des cuves comprennent chacune des moyens d'enfournement séparés.

14. Dispositif de préparation de compositions de verre comprenant un four de l'une des revendications de four précédentes, suivi d'un canal ou bassin d'affinage.

## Claims

1. Process for the continuous preparation of compositions comprising silica, by melting batch materials in a furnace comprising at least two tanks (1, 2) in series, said tanks (1, 2) each comprising at least one burner (4) submerged in the melt, said submerged burners (4) heating the batch materials, at least 80% of the silica and at least 80% of the fluxing agent for the silica being introduced into the first tank (1), the first tank (1) being heated to a higher temperature than the other tank or tanks of the furnace, the temperature difference between the first tank (1) and the other tank or tanks being at least 80°C.

2. Process according to the preceding claim, **characterized in that** at least 90% of the silica and at least 90% of the fluxing agent for the silica are introduced into the first tank.

3. Process according to the preceding claim, **characterized in that** the furnace is fed with a thinner, at least 90% of which is introduced into the second tank of the furnace.

4. Process according to the preceding claim, **characterized in that** the first tank is heated to a temperature ranging from 1230 to 1350° and **in that** the other tank or tanks are heated to a temperature of at most 1150°C.

5. Process according to one of the preceding claims, **characterized in that** the final composition comprises 10 to 70% SiO₂ by weight, 0.3 to 30% Na₂O by weight, 5 to 30% B₂O₃ by weight and 0.3 to 35% by weight of at least one oxide of a metal other than Si, Na and B.

6. Process according to the preceding claim, **characterized in that** the final composition is a frit comprising 40 to 70% SiO₂ by weight, 20 to 30% Na₂O by weight, 5 to 15% B₂O₃ by weight and 3 to 20% by weight of at least one oxide of a metal other than Si, Na and B.

7. Process according to either of the preceding claims, **characterized in that** the metal is chosen from chromium, cobalt, copper, nickel, selenium, zirconium, titanium, manganese, praseodymium, iron and zinc.

8. Process according to one of the preceding claims, **characterized in that** at least one oxide of a metal is introduced into the second tank of the furnace.

9. Process according to the preceding claim, **characterized in that** the furnace comprises at least three tanks in series, the second being heated to a temperature ranging from 1000° to 1150°C and the third to a temperature ranging from 900° to 1000°C.

10. Process according to the preceding claim, **characterized in that** the oxide has several oxidation states and **in that** the submerged burner(s) of the third tank has/have a sufficiently oxidizing flame for the oxidation state of the oxide to be raised on going from the second to the third tank.

11. Process according to one of the preceding claims, **characterized in that** the composition is a color frit or a tile frit or an enamel.

12. Furnace for the continuous melting of a composition comprising silica, said furnace comprising at least three tanks (1, 2, 3) in series, said tanks each comprising at least one burner (4) submerged in the melt.

13. Furnace according to the preceding claim, **characterized in that** two of the tanks each comprise separate charging means.

14. Plant for the preparation of glass compositions, comprising a furnace of one of the preceding furnace claims, followed by a feeder or a fining zone.

## Patentansprüche

1. Verfahren zur kontinuierlichen Herstellung von Siliziumdioxid enthaltenden Zusammensetzungen durch Schmelzen von verglasbaren Materialien in einem Ofen, der wenigstens zwei in Reihe angeordnete Wannen (1,2) umfasst, wobei die Wannen (1, 2) jeweils wenigstens einen in die Schmelzen eingetauchten Brenner (4) umfassen, wobei die Tauchbrenner (4) die verglasbaren Materialien erhitzen, wobei wenigstens 80 % des Siliziumdioxids und wenigstens 80 % des Schmelzmittels des Siliziumdioxids in die erste Wanne (1) eingebracht werden, wobei die erste Wanne (1) auf eine höhere Temperatur als die andere oder anderen Wanne(n) des Ofens erhitzt wird, wobei der Temperaturunterschied zwischen der ersten Wanne (1) und der oder den anderen Wanne(n) wenigstens 80 °C beträgt.

2. Verfahren nach dem vorstehenden Anspruch, **dadurch gekennzeichnet, dass** wenigstens 90 % des Siliziumdioxids und wenigstens 90 % des Schmelzmittels des Siliziumdioxids in die erste Wanne eingebracht werden.

3. Verfahren nach dem vorstehenden Anspruch, **dadurch gekennzeichnet, dass** der Ofen mit einem Verflüssigungsmittel beaufschlagt wird, wovon wenigstens 90 % in die zweite Wanne des Ofens eingebracht werden.

4. Verfahren nach dem vorstehenden Anspruch, **dadurch gekennzeichnet, dass** die erste Wanne auf eine Temperatur von 1230 bis 1350 °C erhitzt wird und dass die andere Wanne oder Wannen auf eine Temperatur von höchstens 1150 °C erhitzt werden.

5. Verfahren nach einem der vorstehenden Ansprüche, **dadurch gekennzeichnet, dass** die Endzusammensetzung 10 bis 70 Gew.-% SiO₂ 0,3 bis 30 Gew.-% Na₂O, 5 bis 30 Gew.-% B₂O₃ sowie 0,3 bis 35 Gew.-% wenigstens eines Oxids eines anderen Metalls als Si, Na und B umfasst.

6. Verfahren nach dem vorstehenden Anspruch, **dadurch gekennzeichnet, dass** die Endzusammensetzung eine Fritte ist, die 40 bis 70 Gew.-% SiO₂, 20 bis 30 Gew.-% Na₂O, 5 bis 15 Gew.-% B₂O₃ sowie 3 bis 20 Gew.-% wenigstens eines Oxids eines anderen Metalls als Si, Na und B umfasst.

7. Verfahren nach einem der beiden vorstehenden Ansprüche, **dadurch gekennzeichnet, dass** das Metall aus Chrom, Kobalt, Kupfer, Nickel, Selen, Zirkonium, Titan, Mangan, Praseodym, Eisen, Zink ausgewählt ist.

8. Verfahren nach einem der vorstehenden Ansprüche, **dadurch gekennzeichnet, dass** wenigstens ein Oxid eines Metalls in die zweite Wanne des Ofens eingebracht wird.

9. Verfahren nach dem vorstehenden Anspruch, **dadurch gekennzeichnet, dass** der Ofen wenigstens drei in Reihe angeordnete Wannen umfasst, wobei die zweite auf eine Temperatur von 1000 °C bis 1150 °C und die dritte auf eine Temperatur von 900 °C bis 1000 °C erhitzt wird.

10. Verfahren nach dem vorstehenden Anspruch, **dadurch gekennzeichnet, dass** das Oxid mehrere Oxidationsgrade aufweist und dass der (die) Tauchbrenner der dritten Wanne eine hinreichend oxidierende Flamme aufweist, damit der Oxidationsgrad des Oxids beim Übergang von der zweiten zur dritten Wanne zunimmt.

11. Verfahren nach einem der vorstehenden Ansprüche, **dadurch gekennzeichnet, dass** die Zusammensetzung eine Färbungsfritte oder eine Fliesenfritte oder ein Email ist.

12. Ofen zum kontinuierlichen Schmelzen einer Siliziumdioxid enthaltenden Zusammensetzung, wobei der Ofen wenigstens drei in Reihe angeordnete Wannen (1, 2, 3) umfasst, wobei die Wannen jeweils wenigstens einen in die Schmelzen eingetauchten Brenner (4) umfassen.

13. Ofen nach dem vorstehenden Anspruch, **dadurch gekennzeichnet, dass** zwei der Wannen jeweils getrennte Beschickungsmittel umfassen.

14. Vorrichtung zur Herstellung von Glaszusammensetzungen, umfassend einen Ofen nach einem der vorstehenden Ofenansprüche, an den sich ein Läuterungskanal oder -becken anschließt.
